# EUROPEAN PATENT SPECIFICATION

(11) **EP 2 651 206 B1**
(45) Date of publication and mention of the grant of the patent: **27.10.2021**
(21) Application number: 11808962.2
(22) Date of filing: 14.12.2011
(51) Int. Cl.: A01G 13/02, A01G 29/00

(54) **A PLANT IRRIGATING SYSTEM AND A METHOD**
PFLANZENBEWÄSSERUNGSSYSTEM UND VERFAHREN
SYSTÈME ET PROCÉDÉ D'IRRIGATION DE PLANTES

(30) Priority: 16.12.2010 NL 2005869; 14.03.2011 NL 2006384; 04.10.2011 NL 2007534
(43) Date of publication of application: 23.10.2013
(73) Proprietor: Holland Technology B.V., 4651 PV Steenbergen (NL)
(72) Inventor: HOFF, Petrus Mattheus Maria, 4703 HD Roosendaal (NL)
(74) Representative: Hoyng Rokh Monegier B.V.
(86) International application number: PCT/NL2011/050851
(87) International publication number: WO 2012/081980

(56) References cited:
- EP-A1- 0 429 050
- EP-A1- 1 875 798
- WO-A1-2009/078721
- US-A1- 2008 190 017
- US-A1- 2010 299 993
- None

## Description

The invention relates to a plant irrigating system, comprising a collection structure for collecting moisture present in the atmosphere, wherein the collection structure is provided with a water recovery surface which during use at least partly makes an angle with respect to the orientation of gravity, further comprising a reservoir for storing the recovered moisture, wherein the reservoir is provided with irrigation means for delivering moisture present in the reservoir to a subsoil located therebelow.

International patent application PCT/NL/2010/050581 discloses such an irrigating system that can be used for irrigating young plants or seeds. WO2009/078721 A1 relates to a device and method for recovering moisture in the atmosphere. US2010/0299993 A1 and US2008/0190017 A1 relate to growing aids for plants.

It is an object of the invention to provide a plant irrigating system having a reduced cost price. Thereto, the collection structure and the reservoir are manufactured from paper material and/or biodegradable plastic.

By using paper material and/or biodegradable plastic, the plant irrigating system can be manufactured in a very cheap way. Further, the environmental impact decreases. Some cardboard, paper foam and/or fiber paper types easily tear, thereby counteracting any theft of the system. The invention relates to a plant irrigating system according to independent claim 1, a method of manufacturing a plant irrigating system according to independent claim 9 and the use of the irrigating system according to independent claim 15.

Further advantageous embodiments according to the invention are described in the following claims.

The invention also relates to a method of manufacturing a plant irrigating system.

In order to breed young plants successfully in different soil species on Earth, it might be desirable to change the composition of the soil since not all soil types match soil conditions that enable optimal growth of a young plant. Changing a soil's composition can be performed by a pretreatment process, before actually planting the plant. Then, the plant can be planted and a plant facilitating system, such an irrigating system, can be placed to improve growth conditions for the young plant, especially in areas that are exposed to relatively extreme weather conditions, such as dry or rocky subsoil.

However, pre-treating the soil might be expensive and/or complex.

It is a further object of the invention to provide a method wherein the soil composition is changed without pre-treating the soil. Thereto, a further method according to the invention includes the steps of selecting a young plant, retrieving information from a soil structure wherein the young plant is to be planted, providing a plant irrigating system for facilitating growth of a young plant, wherein the plant irrigating system includes disseminatable additives dedicated to the young plant and/or to the soil structure where the young plant is to be planted.

By including disseminatable additives in the plant irrigating system, the ground composition can be changed, e.g. in terms of acid degree, salt degree and/or lime degree, by simply placing the plant irrigating system near the plant. The process of pre-treating the soil can now be omitted, thereby saving effort and costs.

It is noted that a method including the steps of selecting a young plant, retrieving information from a soil structure wherein the young plant is to be planted, providing a plant irrigating system for facilitating growth of a young plant, wherein the plant irrigating system includes disseminatable additives dedicated to the young plant and/or to the soil structure where the young plant is to be planted can be applied in combination with a specific plant irrigating system, e.g. wherein the system comprises a collection structure for collecting moisture present in the atmosphere, wherein the collection structure is provided with a water recovery surface which during use at least partly makes an angle with respect to the orientation of gravity, further comprising a reservoir for storing the recovered moisture, wherein the reservoir is provided with irrigation means for delivering moisture present in the reservoir to a subsoil located therebelow, and wherein the collection structure and the reservoir include paper material and/or biodegradable plastic. However, the plant irrigating system used in the above-mentioned method can also be implemented otherwise, e.g. without a reservoir, but includes disseminatable additives dedicated to the young plant and/or to the soil structure where the young plant is to be planted.

Further, by including disseminatable additives, such as an aromatic substance, a flavouring such as camphor, chili, pepper or garlic, a fertilizer, mycorrhizae, anti-fungal material, an insecticide, fungi, animal urine or excrements such as elephant excrements, baits such as sugar, honey and/or syrup, and/or dried plant parts, such as dried Melaleuca species, dried Taxodidium species and/or dried Juniperus species, the environment can be influenced, e.g. by chasing away harmful animals, thereby further increasing growing conditions for the young plant. Specifically, by including animal urine or excrements, harmful animals can be chased away. On the other hand, by including baits, specific animals such as bees can be attracted to the young plant.

By selecting seeds, symbiotic bacteria, eggs, nutrients and/or spores as additives, the young plant can be provided with organic material that is beneficial and dedicated to the specific plant species.

Also harmful animal damaging material, such as glass grindings, sand grindings, metal grindings, cement, lime, silicon and/or rubber can be included in the additives.

The plant irrigating system can be made from biodegradable material and/or pulp to reduce manufacturing costs and keep environmental impact low. By using biodegradable material the additives, if integrated with the base material which then serves as an agent, can be disseminated in a dosed manner.

By coating the plant irrigating system with a coating layer including additives dedicated to the young plant and/or to the soil structure where the young plant is to be planted, a standardized plant irrigating system can be made suitable for use in a specific area on Earth by applying a last manufacturing step. The coating step can be performed centrally in a manufacturing site or locally, near or at the specific planting area. It is noted that also the standardized plant irrigating system can be provided with additives.

Further, the plant irrigating system can be provided with a colour. Here, a first plant irrigating system having a first additive composition can be provided with a first colour while a second plant irrigating system having a second additive composition, different from the first additive composition, can be provided with a second colour, different from the first colour. Thereby, the plant irrigating system are optically easily distinguishable for their purpose.

The colour can be provided by applying a coloured top layer on the plant irrigating system, e.g. by a painting process. However, the colour can also be provided otherwise, e.g. by penetrating the plant irrigating system with coloured particles. As an example, if the plant irrigating system is made from pulp, the material can be soaked through by a colour (dye) stuff.

By colouring the plant irrigating systems, a person applying the system can easily determine which system can be used in a specific area or for breeding a specific plant. Preferably, the specific colour of the system can be chosen such that the person handling the systems directly associates the system with an intended soil type or other area circumstances where the young plant is to be planted. As an example, a yellow system might be intended for use in a sand desert, while a gray system might be intended for use in rocky soils. By colouring the systems with a colour that is naturally associated with a particular soil type, the application of the different systems is made so simple, that a chance of taking a wrong system is almost zero. The systems can also be used by less skilled persons, or even by illiterate persons.

The top layer and the coating layer discussed above can be integrated. However, the layers can also be applied separately, or only one of the layer types can be applied.

By way of example only, embodiments of the present invention will now be described with reference to the accompanying figures in which
Fig. 1 shows a schematic perspective cross sectional view of a first embodiment of a plant irrigating system according to the invention;
Fig. 2 shows a schematic perspective top view of the plant irrigating system of Fig. 1;
Fig. 3 shows a schematic perspective cross sectional view of a second embodiment of a plant irrigating system according to the invention;
Fig. 4 shows a schematic perspective cross sectional view of a third embodiment of a plant irrigating system according to the invention;
Fig. 5 shows a schematic perspective view of a fourth embodiment of a plant irrigating system according to the invention;
Fig. 6 shows a schematic perspective cross sectional view of the plant irrigating system of Fig. 5; and
Fig. 7 shows a schematic top view of a multiple number of plant irrigating systems 1 according to the invention.

It is noted that the figures show merely preferred embodiments according to the invention. In the figures, the same reference numbers refer to equal or corresponding parts.

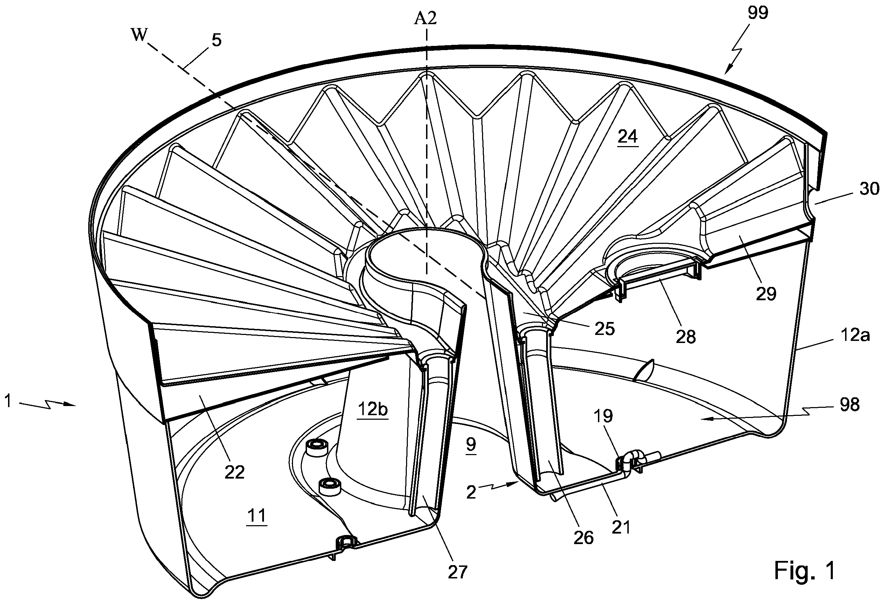

Figure 1 shows a schematic perspective cross sectional view of a first embodiment of a plant irrigating system 1 according to the invention. The system 1 comprises a collection structure 99 for collecting moisture present in the atmosphere, wherein the collection structure 99 is provided with a water recovery surface 24 which during use at least partly makes an angle with respect to the orientation of gravity. The system 1 also includes a reservoir 98 for storing the recovered moisture, wherein the reservoir 98 is provided with irrigation means 19, 21 for delivering moisture present in the reservoir 98 to a subsoil located therebelow.

According to the invention, the collection structure 99 and/or the reservoir 98 are manufactured from a paper material or a biodegradable plastic. The paper material may include cardboard, cellulose, such as paper tissue, paper foam and/or fiber paper.

As an example, the fiber paper may include coconut fiber, cotton fiber, banana fiber, jute fiber, wool fiber, straw fiber, grass fiber, hemp fiber, kenaf fiber, wheat straw paper, sunflower stalks fiber, rags fiber, mulberry paper and/or kozo.

The biodegradable plastic can be based on petroleum based plastics or renewable raw materials, both including a biodegradable additive.

Generally, petroleum based plastics are known as hydro-carbons. During a biodegradation process, microbes are enabled to metabolize the molecular structure of the plastic and to produce inert humus material, water and biogases, such as CH₄ and CO₂. An example of a biodegradable additive is the commercially available substance, known as EcoPure including organic compounds for opening the polymer chain of the hydro-carbons, and attractants stimulating microbial colonization on the plastics. The biodegradation occurs at the atomic level and is anaerobic or aerobic. As an example, a biodegradable additive can be applied for a wide variety of plastics, such as PVC, PE, PP, PS, PC, PET and PA.

Renewable raw materials for forming a biodegradable plastic may include wood fiber, e.g. 60%, combined with a plastic, e.g. 40%. When a suitable biodegradable additive is added, the material is made biodegradable.

Pulp as such can include various materials. Preferably, the pulp consists of biodegradable material. For example, the pulp that is used mainly consists (for example by at least 90%, e.g. at least 99%) of wood pulp, paper pulp, or a combination of paper pulp and wood pulp. The pulp can include other materials as well, for example one or more of the materials that have been mentioned above.

Alternatively, the pulp contains liquid (e.g. water) when it is applied to a mould, wherein the pulp can be dried (i.e. the liquid is removed from the pulp) during and/or after the moulding process.

According to the invention, material forming the collection structure and the reservoir includes water impermeable material and/or is provided with a liquid impermeable coating, e.g. on the inner and/or outer side. Further, the forming material can be coated with a biodegradable layer, preferably having a pre-determined thickness so that a desired degree of degradedness can be set. Alternatively or additionally, the degradedness of the biodegradable layer can be set by including a dosed amount of conserving material. Further, the degradedness can be set by localizing specific parts at specific heights with respect to the ground level. In general, material in the collection structure will degrade later than material in the reservoir, due to the position relative to the ground.

Preferably, the base material of the collection structure and/or reservoir includes specific material, additives, that is bound to the base material for a specific time period and is then disseminated into the environment, due to degradable properties of the base material. By setting the degradedness of the base material, the degree of dissemination of the specific material can be determined. In this respect it is noted environmental parameters, such as wind, moisture etc may influence the degradedness of the base material.

As an alternative, the additives are attached to the plant irrigating system, e.g. in a pocket or in an adhesive layer at an outer surface of the system, such that the additives can disseminate after placing the system on the soil.

After placing the plant irrigating system and the young plant, the additives can immediately disseminate into the soil structure. Especially, the additives can then penetrate into the soil containing roots of the young plant, thus improving surviving conditions for the young plant.

Since the bottom of the reservoir covers the soil, additives can immediately spread in the soil directly below the reservoir. As an example, mycorrhizae or other fungi, more generally hydrophilic additives, can immediately disseminate and/or multiply under the influence of the extreme high humidity under the reservoir. The air below the reservoir can even be saturated with moisture, thus improving the circumstances for the roots to grow. In this respect it is noted that no sunlight enters below the reservoir. Further, temperature conditions are relatively moderate since the soil directly under the reservoir will not become extremely hot or extremely cold. Due to the heat capacity of the reservoir, and the water in it, the temperature under the reservoir mainly follows the temperature course of the environmental air avoiding the extremes.

The additives can thus be integrated with the base material of the structure for facilitating growth of a young plant. Further, additives can be included in a coating layer that is provided on the structure, either on the outer side or the inner side, or both sides. The coating layer can be provided on the structure using a known coating process, such as spraying or immersing. The additives are then attached at the surface of the structure. The additives can also be provided by impregnating the structure with a carrier material including the additives. Then, the whole structure, or a substantial part of it, is penetrated by the additives.

At least one of the above-mentioned techniques, e.g. the immersing process, can be carried out at the spot where the plant breeding system is to be placed and the young plant is to be planted, thereby providing a system that is in principle suitable for application everywhere on Earth, while the last processing step, e.g. the immersing process, makes the system especially dedicated for use at the location of interest. In addition, by providing additives a relatively short time before actually placing the system, the additives can immediately start penetrating the subsoil and a ball of soil that carries at least a part of the root structure of the rootsructure, of the young plant. The additives are then not spoiled during transport and/or storage.

In a specific embodiment according to the invention, the additives are attached to the surface of the system by applying an adhesive, preferably a biodegradable adhesive, such as a resin or a syrup. The adhesive can be provided on the surface of the system in various manners, e.g. by applying a submersing, spraying and/or dripping process.

In an advantageous manner, the additives are provided in the reservoir of the plant irrigating system, so that the moisture that is stored in the reservoir is conditioned, e.g. in terms of nutrients, mycorrhizae, or purity of the water, thus optimizing the irrigating water to the specific plant conditions.

In a preferred embodiment according to the invention, a lower part of the outer reservoir surface is provided with additives, e.g. by applying an adhesive as decribed above. As an example, the outer bottom part is at least partially provided with additives. When nesting reservoirs, e.g. for the purpose of storage or transport, the additives are brought inside the reservoir of a lower reservoir. In a specific example, the lower part of the outer reservoir surface is provided with protrusions or with a relief so that additives are easily transferred from the outer bottom of a reservoir to the inner bottom of a nested reservoir located therebelow.

By providing the additives only to the lower part of the outer reservoir, such as the bottom, additives and adhesives are consumed very efficiently, so that spoil of material is counteracted. Further, it is counteracted that the reservoirs and/or, more generally, the plant irrigating systems become dirty.

The additives may include aromatic substances, flavourings, such as camphor, chili, pepper or garlic, (artificial) fertilizer or mycorrhizae, anti-fungal material and/or an insecticide, e.g. nicotine or borax for chasing away harmful animals such as termites, and/or fungi. Similarly, the additives may include animal urine or excrements such as elephant excrements, baits such as sugar, honey and/or syrup, and/or dried plant parts, such as dried Melaleuca species, dried Taxodidium species and/or dried Juniperus species. As an example, dried Taxodidium distichum and/or dried Melaleuca species can be used for chasing away termites.

Further, the additives may include seeds, symbiotic bacteria, eggs, nutrients and/or spores that may germinate after leaving the base material, thereby improving the biodiversity of the irrigating system.

In addition, the additives may include material that damages harmful animals. Such material may include glass grindings, sand grindings, metal grindings, cement, lime, silicon, rubber or any material that damages harmful animals, preferably without poisoning.

The additives may influence soil characteristics. As an example, an acid degree can be increased or decreased. As a further example, a salt degree can be reduced.

The system may include a combination of different additives. As an example, a first part of the system, e.g. the collection structure or a cup (as described below), might include a first additive, while a second part of the system, e.g. a reservoir or an intermediate portion (as described below) may include a second additive. The number of additives such as seeds, fungi and/or spores can be determined before integrating in a base material.

Thus, the additive may serve as plant protecting material and/or plant nutrition material.
As an example, the additive may include at least one element of a group consisting of glass grindings, chili pepper (piri piri), Ricinus Communis seed (castor-oil plant), Neem tree (leaf), camphor, Asafoetida, Acidum Boricum (boracic acid), Glucono-Delta-Lacton (also known as E575), Kalium carbonate (E501), Potassium (ash), Magnesium sulfate (called in Dutch "bitterzout"), ginger, black pepper, gypsum, ureum (fertilizer), Canabis Sativa (leaf), Canabis seed, Canabis oil, Melaleuca Alternifolia oil (Tea tree), Datura seed (thorn-bush apple), cement, animal excrements, such as sheep manure or goat manure.

By integrating the specific material in the base material, the base material serves as an agent for the specific material that disseminates in a dosed manner.

Advantageously, the plant irrigating system may include biodegradable material. As an example, paper material and/or biodegradable plastic can be used.

By using paper material and/or biodegradable plastic, the plant irrigating system can be manufactured in a very cheap way. Further, the environmental impact decreases. Some cardboard, paper foam and/or fiber paper types easily tear, thereby counteracting any theft of the system. The paper material may include cardboard, cellulose, such as paper tissue, paper foam and/or fiber paper.

According to an aspect of the invention, a paper material carrier is provided including specific material for dissemination into the environment caused by a biodegrading process of the paper material, e.g. due to moisture. The specific material may include the specific materials described above in relation to the base material of the irrigating system.

The paper material carrier may be integrated with or fixed to the irrigating system or can be provided separately. Further, the paper material carrier may be applied without the irrigating system, e.g. for sowing seed in a field.

Further, additives can be included in a coating layer provided on the plant irrigating system, simplifying the manufacturing, storing and distributing process. Advantageously, the structure is provided with a colour top layer, the specific colour indicating the type of additives that are provided on the structure. As an example, yellow systems are applicable for sand type soils, green systems are applicable for rocky type soils, pink systems are applicable for soils having a high pH degree, and gray systems are applicable for soils having a low pH degree. By colouring systems having additive composition dedicated to a particular soil and/or plant, the applicability of the system is even further recognizable.

It is noted that systems provided with a particular additive composition can be made distinguishable also in other ways, e.g. by providing marks on the outer surface.

In the shown embodiment, the water recovery surface 24 has a specific geometry for receiving rain, bloom and other moisture from the atmosphere. The water is collected in a drain 25 and flown to the reservoir 98 via downwardly extending pipes 26, 27. The moisture receiving structure 24 further includes a cap 28 removably closing an aperture 23 in the cover layer 22, and an exit drain 29 flowing excess water to an exit opening 30 in a radial outer wall section 12a of the water reservoir 98. The wall module 2 extends through the cover layer 22 and the moisture receiving structure 24 and forms a radial inner wall of the drain 25.

Further, in the shown embodiment, the plant irrigating system includes an upwardly extending tube 2 forming a radial inner wall section 12b of the water reservoir 98. The tube 2 is connected to the collection structure 99 and has a longitudinal axis A2, for at least partly sideways surrounding a young plant. The water reservoir 98 is thus formed by the radial outer wall section 12a, the radial inner wall section 12b, a bottom side 11 and a cover layer 22 that forms a top section of the water reservoir 98.

During use of the removable plant protection system 1, a single or a multiple number of seeds, plants or small trees are placed in a soil area 9 surrounded by the tube 2, such that it on the one hand throws a shadow on the soil area 4 near the tube 2 when the sun reaches its highest orbit point and on the other hand allows a sun beam on the soil area 4 at a time period on the day when the elevation of the sun is relatively low, e.g. a few hours after sunrise and/or a few hours before sunset, as explained in more detail in the International patent application PCT/NL2010/050581.

Thereto, the system 1 is placed on the Earth's surface and oriented such that the horizontal orientation of the tube aperture extends substantially parallel to an Earth's circle of latitude, i.e. along an East-West line 5 extending from the East E to the West W. The East-West line 5 is perpendicular to a North-South line, not shown, also called a meridian line, extending from the North N to the South S.

The irrigation means for irrigation the subsoil may include an injection needle or to a capillary structure 21 extending through an irrigation point 19 for irrigation the subsoil in a dosed manner. Alternatively, a membrane is applied.

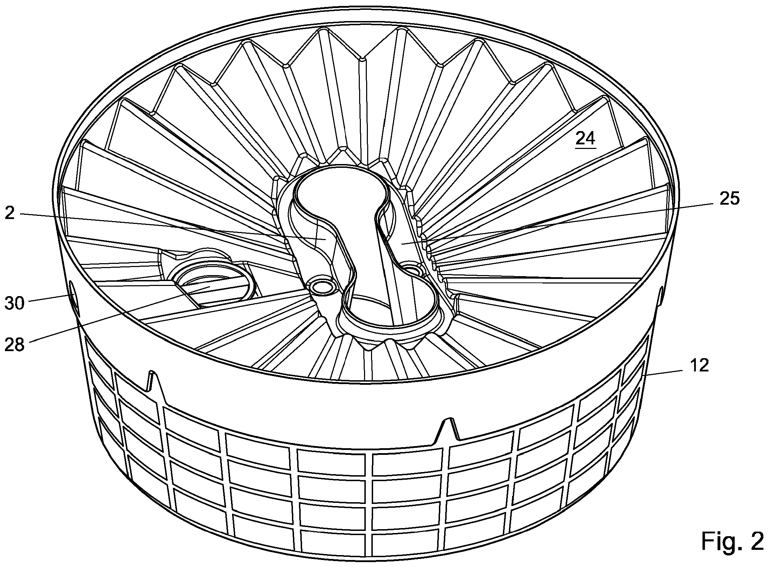

Figure 2 shows a schematic perspective top view of the plant irrigating system of Fig. 1. The tube surrounds an area that is mainly shaped as a bar-bell. However, the tube can also be formed to surround another area geometry, such as a disc, a square, or an elongated area. Further, the water recovery surface 24 comprises a receiving surface which during use makes a first angle with respect to the orientation of gravity, and a collecting surface bounding a bottom edge of the receiving surface, which collecting surface during use makes a second angle with respect to the orientation of gravity, wherein the first angle is smaller than the second angle. In the shown embodiment, the water recovery surface 24 includes a multiple number of radially extending grooves that are interposed by radially extending rims. The water recovery surface 24 is mainly funnel-shaped, so that the water in the grooves flow towards the drain 25, and then, via the pipes 26, 27 into the reservoir 98.

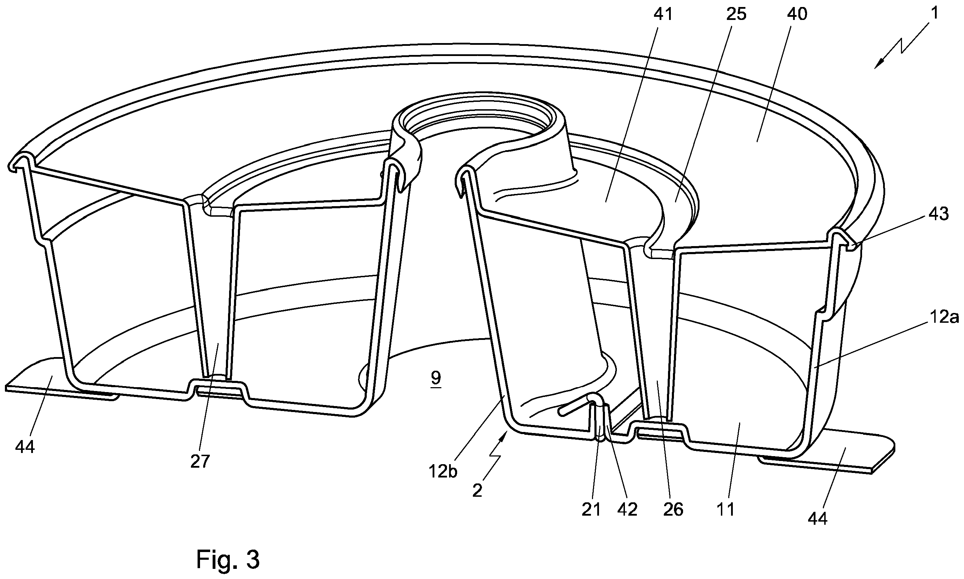

Figure 3 shows a schematic perspective cross sectional view of a second embodiment of a plant irrigating system 1 according to the invention. Here, the collection surface of the water recovery surface 24 is substantially transverse with respect to the orientation of gravity and forms a channel 25 surrounding the tube 2. The channel 25 is located on a radial position mainly halfway between the tube 2 and an outer wall 12a of the reservoir 98. The water recovery surface 24 includes a radially outwardly tilted inner ring segment 41 extending between the tube 2 and the channel 25. Further, the surface 24 includes a radially inwardly tilted outer ring segment 40 extending between the outer wall 12a of the water reservoir and the channel 25. In the shown embodiment, the ring segments 40, 41 are mainly flat, forming a single or a multiple number of substantially flat receiving surface segments. In principle, however, the ring segments 40, 41 can be provided with a grooved pattern, e.g. including radially extending grooves, so as to increase a moisture recovery performance, especially condensation of dew droplets. By providing the above-described water recovery surface 24, the exit drain 29, as constructed in the embodiment shown in Fig. 1, is superfluous. If the level of the recovered water on the surface 24 rises about a predetermined level, e.g. during raining, the excess of water flows away across the outer rim 43 of the surface 24.

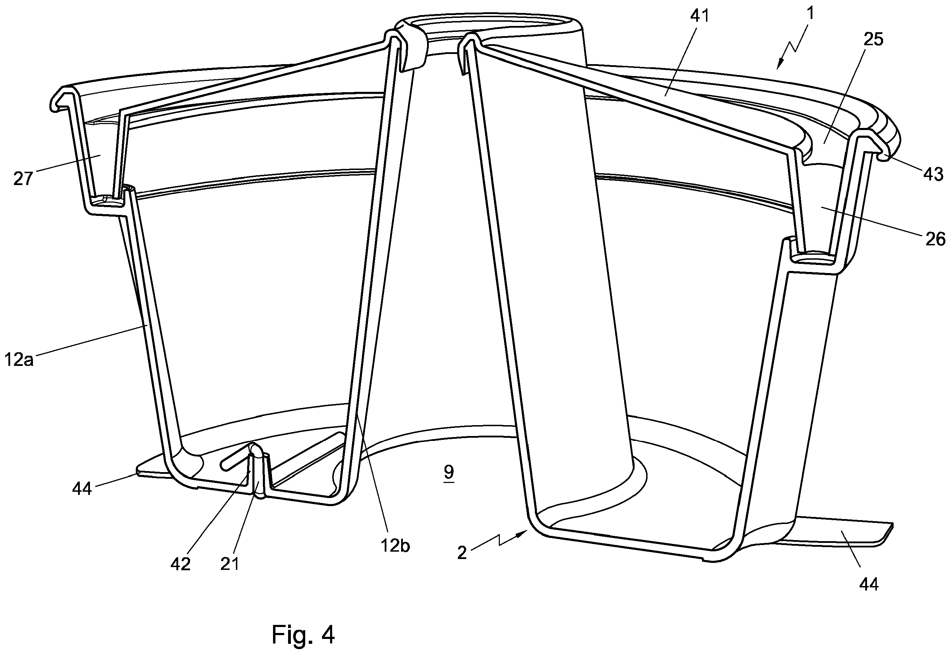

Figure 4 shows a schematic perspective cross sectional view of a third embodiment of a plant irrigating system 1 according to the invention. Here, the channel 25 is located on a radial position near an outer wall 12a of the reservoir 98. The water recovery surface 24 now includes a single ring segment, viz. a radially outwardly tilted inner ring segment 41 extending between the tube 2 and the channel 25. Apparently, the channel 25 can be located on another radial position between the tube 2 and the outer wall 12a of the reservoir 98. By locating the channel somewhere between the outer wall 12a of the reservoir and the tube, the height of the reservoir can be reduced while maintaining the same volume with respect to the construction shown in Figures 1 and 2, thereby saving material. The channel 25 in Figures 3 and 4 includes at least one outflow pipe 26, 27 extending from the channel 25 downwardly into the reservoir 98. In principle, the outflow pipe 26, 27 can be integrated with the channel 25. However, the outflow pipe can also be formed separately for assembling into an aperture of the channel 25.

Advantageously, the collection structure may include a passive valve system providing an opening for allowing water to flow from the channel 25 into the reservoir 98 when the channel is wet and substantially closing the opening when the channel is dry. As an example, the passive valve system comprises inwardly extending fingers that bend downwardly when they are wet, and extend in a horizontal plane when they are dry. Then, evaporation of water in the reservoir 98 is minimized.

Preferably, the collection structure extends across the outer wall 12a of the reservoir and is connected therewith using a snap fitting. In the shown embodiments, the snap fitting is formed by a snap on the outer rim 43 of the water recovery surface 24 engaging with the upper part of the reservoir's outer wall 12a, so that a solid fixture is obtained. In this way collapse of the reservoir 98 is counteracted, while on the other hand, material for forming the reservoir's outer wall 12a can be saved. Here, the snap extends radially across the outer wall 12a, so that radially outwardly forces exerted on the outer wall 12a can be received. On the tube side, a similar construction can be applied. Specifically, the tube and the collection structure can be interconnected using a construction wherein fingers extend through apertures, thus counteracting undesired deformation of the tube geometry.

The collection structure and the reservoir are preferably detachable coupled, and nestable on their own, thereby saving storage and/or transport space. Further, the cover layer 22 and the cap 28 removably closing an aperture 23 in the cover layer 22 are left in the embodiments shown in Figures 3 and 4, thereby simplifying the design of the irrigating system 1. The collection structure and the reservoir can also be fixed to each other by gluing, thereby preventing that the reservoir is opened, e.g. to counteract theft. Alternatively, the collection structure and the reservoir are integrally formed.

Preferably, the irrigation means include a ring module 42 fixed to the reservoir bottom, and an irrigation element 21 extending through the ring module 42, so that a durable irrigation construction is obtained, without causing unintended water losses. Further, the reservoir 98 is advantageously provided with an air opening, thereby avoiding that the irrigation means are blocked by an under pressure in the reservoir 98.

The system 1 as shown in Figures 3 and 4 further includes sidewardly extending elements for stabilizing the reservoir on the ground, e.g. via nails. The sidewardly extending elements are connected to the bottom 11 or outer side wall 12a of the reservoir 98, e.g. via a rigid or flexible structure 44, such as a pivotable connection. Apparently, the sidewardly extending elements can also be applied to other embodiments of the system as described herein. The sidewardly extending element may include a body extending between two opposite ends, wherein a first end is provided with coupling means for coupling to a side or bottom part of the plant protection system, and wherein the second end is arranged for fixation to the soil, as described in patent application NL 2 003 974.

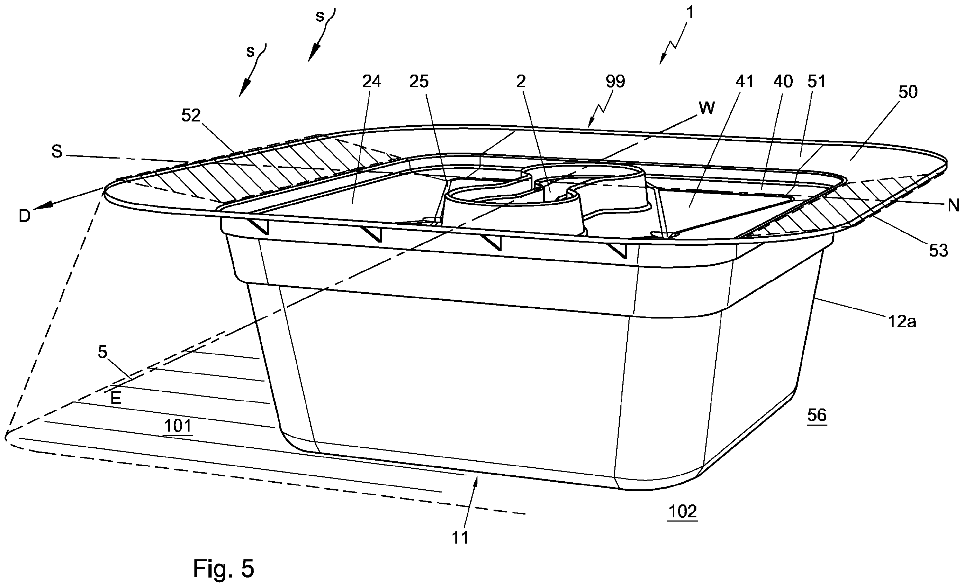

It is noted that the embodiments shown in Figures 3 and 4 can be manufactured from cardboard, paper foam and/or fiber paper, but also from other materials, such as biodegradable or non-biodegradable plastics. In an advantageous manner, the system includes injection moulded product modules, and/or vacuum assisted moulding, thereby potentially reducing the cost price considerably. As an example of such an embodiment, the collection surface forms a channel surrounding the tube and the receiving surface includes a single or a multiple number of substantially flat segments. In another embodiment, the channel is located on a radial position mainly halfway between the tube and an outer wall of the reservoir or on a radial position near an outer wall of the reservoir. Figure 5 shows a schematic perspective view of a fourth embodiment of a plant irrigating system according to the invention. Here, the system includes an overhanging portion 50 extending away from the tube 2, beyond the outer side wall 12a of the reservoir 98. The overhanging portion 50 is part of the collection structure 99. The water recovery surface 24 of the collection structure 99 includes an upper surface section of the overhanging portion. The overhanging portion 50, implemented as a sheet, extends in a direction D substantially transverse with respect to the longitudinal axis A2 of the tube 2. In the shown embodiment, the overhanging portion 50 extends from a top side of the outer side wall 12a of the reservoir 98 in an outward direction relative to the reservoir 98, away from the tube 2. During sunshine, the overhanging portion 50 generates a shadow 101, in some cases, on a ground surface 102 adjacent to the outer side wall 12a of the reservoir 98, depending on the direction of sunbeams S.

By providing an overhanging portion 50 extending away, outwardly from the tube 2 and beyond the outer side wall 12a of the reservoir, a sunshield is obtained screening objects from direct sunbeams S. The screened objects may include a ground surface 102 adjacent to the outer side wall 12a of the reservoir and extending in a radially outwardly direction and/or a part of the outer reservoir side wall 12a itself. As a consequence, water that is present in the reservoir 98 and in the ground under a screened ground surface 101 can be cooled. By screening at least a part of the reservoir 98 and/or the ground area 56 from the sun, heating up of the water in the water reservoir 98 and/or the ground in at least a part of the ground area 56 is counteracted, thereby counteracting evaporation of water contained in the reservoir and/or in the ground in the ground area 56.

As a result, the temperature of the screened ground around the reservoir 98 is relatively low, providing better surviving and growing conditions for the plant. Also, evaporation of moisture that is present in the screened ground around the reservoir 98 is counteracted, further improving surviving and growing conditions for the plant to be protected.

By integrating the overhanging portion 50 with the collection structure, the water recovery surface 24 may extend beyond the reservoir 98 so that the area of the water recovery surface 24 is relatively large. Therefore, a relatively large amount of water may be recovered.

It is noted that, although the overhanging portion 50 is in the shown embodiment formed as a radially inwardly tilted overhanging ring segment 51 of the water recovery surface 24, the portion 50 can also be formed otherwise. For example, the system 1 may comprise a single or a multiple number of overhanging portion sections 52, 53 not entirely surrounding the reservoir 98. As a detailed example, the system may include a pair of strip shaped overhanging portions 52, 53 extending in opposite directions, e.g. to the North direction N, and/or to the South direction S, during use of the system.

In the shown embodiment, the overlapping portion 50 is staggered upwardly from a water recovery surface 24 that is located above the reservoir 98, thereby providing a relatively large buffer volume for recovered water, e.g. during a rain shower. However, the overlapping portion 50 can also be arranged in line with other collection structure parts, e.g. by providing a substantially flat water recovery surface.

In an alternative embodiment, the overhanging portion 50 is not part of the collection structure 99, but is formed separately. Then, the overhanging portion 50 may be placed not adjacent to the water recovery surface, but at another location, e.g. half-way the outer side wall 12a of the reservoir 98. The overhanging portion then functions as an awning screening objects to be cooled. The overhanging portion can be integrated with the outer side wall 12a of the reservoir, or can be manufactured separately and attached to the outer side wall 12a.

Preferably, the overhanging portion 50 comprises a material capable of reflecting and/or absorbing sunlight, in order to counteract that sunlight travels through the portion 50. Alternatively or additionally, the overhanging portion 50 may be coated with a coating for reflecting and/or absorbing sunlight.

It is noted that the overhanging sheet 50 does not need to be placed near a top side of the outer side wall 12a of the reservoir 98, nor does the overhanging sheet 50 need to be tilted radially inwardly. For example, if the overhanging sheet 50 is formed as a sunshade, for protecting the ground area 56, the overhanging sheet may be placed lower than the water recovery surface 24, e.g. halfway the radial outer wall section 12a. Moreover, the overhanging sheet 50 may be oriented substantially horizontal or even radially tilted outwardly.

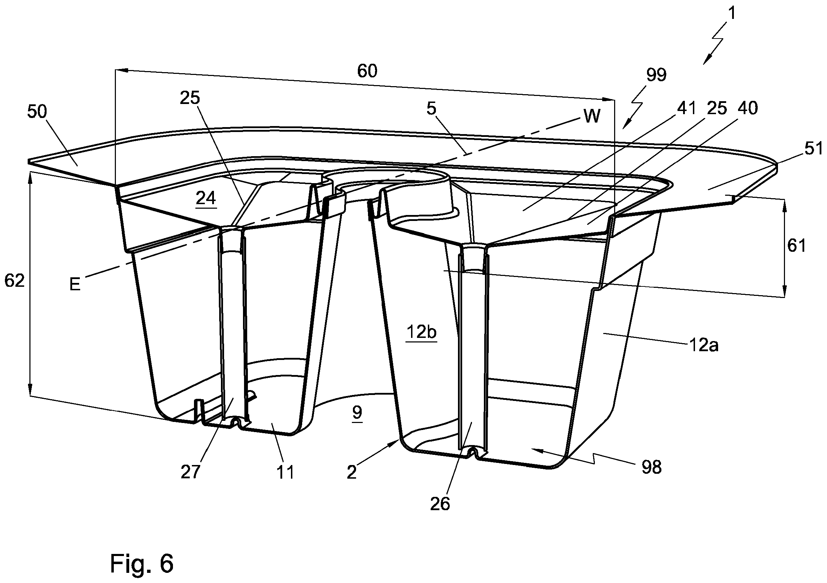

Figure 6 shows a schematic perspective cross sectional view of the plant irrigating system of Fig. 5. The system 1 comprises a multiple number of separate modules, not manufactured as an integrated part of the system. A first module is a bin formed by the radial outer wall section 12a, the radial inner wall section 12b and the bottom side 11 of the water reservoir 98. A second module of the system 1 is the collection structure 99 including the overhanging portion 50 and the water recovery surface 24. Furthermore, the outflow pipes 26, 27 can be formed as separate modules, or can be formed integrally with the collection structure 99.

By applying the modular approach, lateral dimensions of the modules are relatively small. Further, the modules can be optimized, e.g. in terms of materials and/or costs. Another potential advantage is that modules can be designed such that they are efficiently nestable, e.g. the bins and/or the collection structures 99, thereby reducing space that is needed for storing and/or transporting the modules. As a consequence, a large number of modules can be stored on a transport pallet or another transporting unit.

By keeping dimensions of the separate manufactured modules relatively small, the manufacturing process can be relatively cheap. As an example, when a mould is used for producing the bin, e.g. for injection moulding, vacuum assisted moulding and/or transfer moulding, the dimensions of the bin, including its diameter 60 and height 62 can be optimized for cost price. A similar optimization can be applied to a mould for producing the collection structure 99. A relatively small mould may reduce its cost price.

Also when the system, or parts thereof, are manufactured from paper material such as cardboard, cellulose, paper foam and/or fiber paper, the cost price can be kept low. When a module is formed by dipping a fine wire mesh into a tub filled with a fibrous pulp slurry and sucking the slurry toward the mesh, a relatively low cost price can be obtained if the modules have a relatively small dimension.

As an example, if the diameter of the bin is chosen relatively small, a relatively large number of bins can be formed simultaneously. Although the diameter of the bin is then relatively small, still a large water recovery surface area can be realized with the system, since the collection structure is manufactured separately. If a specific reservoir volume can be obtained by selecting a proper height of the bin in combination with a fixed relatively small bin diameter. Then the manufacturing costs can be kept relatively low, also if a larger reservoir volume is desired.

When considered in terms of reservoir volume, i.e. the amount of water that can be stored in the reservoir, base material can be saved by making the reservoir relatively high and the dimensions in the horizontal plane relatively small. Then, a relatively large number of reservoirs 98 can be manufactured simultaneously in the tub. On the other hand, by making the water recovery surface relatively large, a large area is obtained for recovering moisture that is present in the atmosphere, independent of the horizontal dimensions of the reservoir.

It is noted that the collection structure 99 and the reservoir 98 of the plant irrigating system 1 can be made from paper material and/or biodegradable plastic. Alternatively, the collection structure 99 and/or the reservoir 98 of the plant irrigating system comprising an overhanging portion extending away from the tube, beyond an outer side wall of the reservoir are made from other materials, such as non-biodegradable petroleum based plastics.

It is also noted that the tube can be formed as a wall defining a bar-bell, a disc or a square, seen in a top-down view. However, the tube can also be formed in another way, e.g. forming an elongated closed or half-open slot, seen in a top-down view.

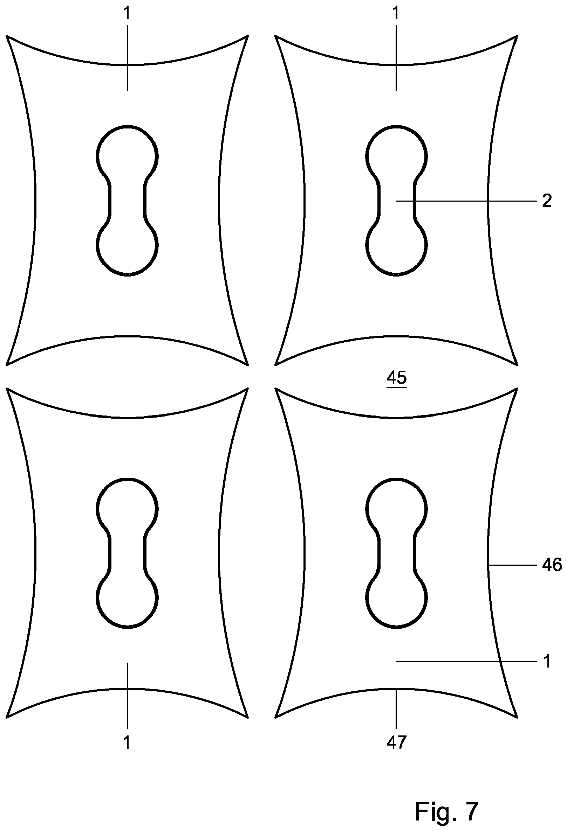

Figure 7 shows a schematic top view of a multiple number of plant irrigating systems 1 according to the invention. Here, the systems are mainly shaped as rectangular boxes having two shorter sides 46 and two longer sides 47. As shown in Fig. 7 the plant irrigating systems have in this embodiment locally inwardly bending structures providing a plant space 45 outside the system 1 when multiple systems are placed next to each other. In the plant space 45 a single or a multiple number plants can be planted, thereby further improving the efficiency of the used material for forming the plant irrigating system.

According to an aspect of the invention, a method is provided of manufacturing a plant irrigating system, comprising a collection structure for collecting moisture present in the atmosphere, wherein the collection structure is provided with a water recovery surface which during use at least partly makes an angle with respect to the orientation of gravity, further comprising a reservoir for storing the recovered moisture, wherein the reservoir is provided with irrigation means for delivering moisture present in the reservoir to a subsoil located therebelow, and wherein the method includes the step of manufacturing the collection structure and the reservoir from cardboard, paper foam and/or fiber paper.

Preferably, when constructing the collection structure and the reservoir, the height of the reservoir wall is determined by starting from a predetermined dimension of the outer reservoir wall's upper side and selecting a desired reservoir volume. Then, for a range of reservoir volumes, a single collection structure fits, since the outer reservoir wall's upper side has a fixed measure.

The invention is not restricted to the embodiments described herein. It will be understood that many variants are possible within the scope of the appended claims.

It is noted that the plant irrigating system can have any closed periphery, in principle, when seen in a top view, such as a U-profile, a polygon, a square, a rectangle, a triangle, a circle, an ellipse, etc. Further, the irrigating system can be formed without the above described tube. Then, the irrigating system can be formed as a bag, bin, tank or pot.

The tube can also have a desired contour, such as a square, a circle, a rectangle, or a semi-closed or half-opened contour, such as an U-shape.

It is noted that the cover layer 22 applied in the system shown in Fig. 1 can in principle also be applied in the systems as shown in Figures 3 and 4, e.g. for isolation purposes, to counteract that the temperature of the water in the reservoir becomes too hot.

The collection structure and/or the reservoir can be provided with a heat isolating layer to prevent excessive increase of water in the reservoir. As an example, the collection structure may include hollow spaces or heat isolating material, e.g. perlite particles.

It is further noted that any structure for facilitating growth of a young plant may include disseminatable additives dedicated tot the young plant and/or to the soil structure where the young plant is to be planted.

Other such variants will be apparent for the person skilled in the art and are considered to fall within the scope of the invention as defined in the following claims.

## Claims

1. A plant irrigating system (1) comprising a reservoir (98) for storing water, wherein the reservoir (98) comprises an outer wall (12a), an upwardly extending tube (2) forming an inner wall (12b) of the water reservoir (98) for at least partly sideways surrounding a young plant and a bottom side (11) and wherein the reservoir (98) is provided with irrigation means (19, 21) for delivering water present in the reservoir (98) to a subsoil located therebelow and
further comprising a collection structure (99) for collecting water present in the atmosphere,
**characterized in that** the plant irrigating system is manufactured from paper pulp material, wherein the paper pulp material forming the collection structure and the reservoir includes water impermeable material and/or is provided with a liquid impermeable biodegradable coating on the inner and/or outer side.

2. The plant irrigating system (1) according to claim 1, including disseminatable additives dedicated to the young plant and/or to the soil structure where the young plant is to be planted wherein the disseminatable additives are integrated in the paper pulp material of the collection structure (99) and/or the reservoir (98) or in the coating layer.

3. The plant irrigating system (1) according to claim 2, wherein the disseminatable additives modify soil characteristics, such as the acid degree, a salt degree and/or a lime degree or wherein the disseminatable additives comprise an aromatic substance, a flavouring such as camphor, chili, pepper and/or garlic, a fertilizer, mycorrhizae, antifungal material, an insecticide, fungi, animal urine or excrements such as elephant excrements, baits such as sugar, honey and/or syrup, and/or dried plant parts, such as dried Melaleuca species, dried Taxodidium species and/or dried Juniperus species seeds, symbiotic bacteria, eggs, nutrients and/or spores and/or a harmful animal damaging material, such as glass grindings, sand grindings, metal grindings, cement, lime, silicon and/or rubber.

4. The plant irrigating system (1) according to claims 1 - 3, wherein the collection structure (99) is provided with a water recovery surface (24) which during use at least partly makes an angle with respect to the orientation of gravity, wherein the water recovery surface (24) comprises a receiving surface which during use makes a first angle with respect to the orientation of gravity, and a collecting surface bounding a bottom edge of the receiving surface, which collecting surface during use makes a second angle with respect to the orientation of gravity, wherein the first angle is smaller than the second angle.

5. The plant irrigating system (1) according to claim 4, wherein the collecting surface forms a channel surrounding the tube (2) and wherein the channel is located on a radial position mainly halfway between the tube (2) and an outer wall of the reservoir (98) or on a radial position near an outer wall of the reservoir (98).

6. The plant irrigating system (1) according to any of the preceding claims 4 or 5, wherein the collection structure (99) includes a passive valve system providing an opening for allowing water to flow from the channel into the reservoir (98) when the channel is wet and substantially closing the opening when the channel is dry.

7. The plant irrigating system (1) according to any of the preceding claims 4 - 6, wherein the collection structure (99) extends across the outer wall of the reservoir (98) and is connected therewith using a snap fitting.

8. The plant irrigating system (1) according to any of the preceding claims 1 - 7, further comprising an overhanging portion extending away from the tube (2), beyond an outer side wall of the reservoir (98), wherein the overhanging portion optionally is part of the collection structure (99) and wherein the water recovery surface (24) includes an upper surface section of the overhanging portion.

9. A method of manufacturing a plant irrigating system (1), according to any of the preceding claims 1-8, comprising a collection structure (99) for collecting water present in the atmosphere, wherein the collection structure (99) is provided with a water recovery surface (24) which during use at least partly makes an angle with respect to the orientation of gravity, **characterized in that** the method includes comprises the steps of:
- selecting a young plant,
- retrieving information from a soil structure wherein the young plant is to be planted,
- providing a plant irrigating system (1) for facilitating growth of a young plant, wherein the system includes disseminatable additives dedicated to the young plant and/or to the soil structure where the young plant is to be planted.

10. The method according to claim 9 wherein a multiple number of disseminatable additive species are included in the base material of the plant irrigating system (1).

11. The method according to any of the preceding claims 9 or 10, wherein additives modify soil characteristics, such as the acid degree, a salt degree and/or a lime degree.

12. The method according to any of the preceding claims 9 - 11 , wherein the disseminatable additives comprise an aromatic substance, a flavouring such as camphor, chili, pepper and/or garlic, a fertilizer, mycorrhizae, antifungal material, an insecticide, fungi, animal urine or excrements such as elephant excrements, baits such as sugar, honey and/or syrup, and/or dried plant parts, such as dried Melaleuca species, dried Taxodidium species and/or dried Juniperus species seeds, symbiotic bacteria, eggs, nutrients and/or spores and/or a harmful animal damaging material, such as glass grindings, sand grindings, metal grindings, cement, lime, silicon and/or rubber.

13. The method according to any of the preceding claims 9- 12, comprising the step of coating the plant irrigating system (1) with a coating layer including additives dedicated to the young plant and/or to the soil structure where the young plant is to be planted.

14. The method according to any of the preceding claims 9 - 13, comprising the step of providing the plant irrigating system (1) with a colour, wherein a first plant irrigating system (1) provided with a first additive composition has a first colour and wherein a second plant irrigating system (1) provided with a second additive composition, different from the first additive composition, has a second colour, different from the first colour.

15. The use of the irrigation system according to anyone of claims 1 - 8 in the method according to anyone of claims 9 - 14.

## Patentansprüche

1. Pflanzenbewässerungssystem (1), das ein Reservoir (98) zum Speichern von Wasser umfasst, wobei das Reservoir (98) eine Außenwand (12a), ein sich nach oben erstreckendes Rohr (2), das eine Innenwand (12b) des Wasserreservoirs (98) zum wenigstens teilweisen seitlichen Umgeben einer jungen Pflanze ausbildet, und eine Unterseite (11) umfasst und wobei das Reservoir (98) mit Bewässerungsmitteln (19, 21) zum Zuführen von Wasser, das in dem Reservoir (98) vorhanden ist, zu einem Unterboden versehen ist, der sich darunter befindet, und das ferner eine Sammelstruktur (99) zum Sammeln von Wasser umfasst, das in der Atmosphäre vorhanden ist, **dadurch gekennzeichnet, dass** das Pflanzenbewässerungssystem aus Papierzellstoffmaterial hergestellt ist, wobei das Papierzellstoffmaterial, das die Sammelstruktur und das Reservoir ausbildet, wasserundurchlässiges Material beinhaltet und/oder auf der Innen- und/oder Außenseite mit einer flüssigkeitsundurchlässigen biologisch abbaubaren Beschichtung versehen ist.

2. Pflanzenbewässerungssystem (1) nach Anspruch 1, das ausstreubare Additive beinhaltet, die für die junge Pflanze und/oder die Bodenstruktur zweckbestimmt sind, in die die junge Pflanze gepflanzt werden soll, wobei die ausstreubaren Additive in das Papierzellstoffmaterial der Sammelstruktur (99) und/oder das Reservoir (98) oder in die Beschichtungsschicht integriert sind.

3. Pflanzenbewässerungssystem (1) nach Anspruch 2, wobei die ausstreubaren Additive, die Bodenmerkmale, wie etwa den Säuregrad, einen Salzgrad und/oder einen Kalkgrad, modifizieren oder wobei die ausstreubaren Additive eine aromatische Substanz, einen Geschmacksstoff, wie etwa Kampfer, Chili, Pfeffer und/oder Knoblauch, ein Düngemittel, Mykorrhizen, pilztötendes Material, ein Insektizid, Pilze, Tierurin oder -kot, wie etwa Elefantenkot, Köder, wie etwa Zucker, Honig und/oder Sirup und/oder getrocknete Pflanzenteile, wie etwa getrocknete Melaleuca-Arten, getrocknete Taxodidium-Arten und/oder getrocknete Samen von Juniperus-Arten, symbiotische Bakterien, Eier, Nährstoffe und/oder Sporen und/oder ein schädliches tierschädigendes Material, wie etwa Glasschleifabrieb, Sandschleifabrieb, Metallschleifabrieb, Zement, Kalk, Silizium und/oder Kautschuk umfassen.

4. Pflanzenbewässerungssystem (1) nach den Ansprüchen 1-3, wobei die Sammelstruktur (99) mit einer Wasserrückgewinnungsoberfläche (24) versehen ist, die während einer Verwendung wenigstens teilweise einen Winkel hinsichtlich der Ausrichtung der Schwerkraft bildet, wobei die Wasserrückgewinnungsoberfläche (24) eine Aufnahmeoberfläche, die während der Verwendung einen ersten Winkel hinsichtlich der Ausrichtung der Schwerkraft bildet, und eine Sammeloberfläche umfasst, die eine Unterkante der Aufnahmeoberfläche begrenzt, wobei die Sammeloberfläche während der Verwendung einen zweiten Winkel in Bezug auf die Ausrichtung der Schwerkraft bildet, wobei der erste Winkel kleiner als der zweite Winkel ist.

5. Pflanzenbewässerungssystem (1) nach Anspruch 4, wobei die Sammeloberfläche einen Kanal ausbildet, der das Rohr (2) umgibt und wobei sich der Kanal in einer radialen Position hauptsächlich auf halber Strecke zwischen dem Rohr (2) und einer Außenwand des Reservoirs (98) oder in einer radialen Position nahe einer Außenwand des Reservoirs (98) befindet.

6. Pflanzenbewässerungssystem (1) nach einem der vorhergehenden Ansprüche 4 oder 5, wobei die Sammelstruktur (99) ein passives Ventilsystem beinhaltet, das eine Öffnung bereitstellt, um es Wasser zu ermöglichen, aus dem Kanal in das Reservoir (98) zu fließen, wenn der Kanal nass ist, und die Öffnung im Wesentlichen schließt, wenn der Kanal trocken ist.

7. Pflanzenbewässerungssystem (1) nach einem der vorhergehenden Ansprüche 4-6, wobei sich die Sammelstruktur (99) über die Außenwand des Reservoirs (98) hinweg erstreckt und unter Verwendung einer Schnappbefestigung damit verbunden ist.

8. Pflanzenbewässerungssystem (1) nach einem der vorhergehenden Ansprüche 1-7, das ferner einen überhängenden Abschnitt umfasst, der sich von dem Rohr (2) weg über eine Seitenaußenwand des Reservoirs (98) hinaus erstreckt, wobei der überhängende Abschnitt optional Teil der Sammelstruktur (99) ist und wobei die Wasserrückgewinnungsoberfläche (24) einen oberen Oberflächenabschnitt des überhängenden Abschnitts beinhaltet.

9. Verfahren zum Herstellen eines Pflanzenbewässerungssystems (1) nach einem der Ansprüche 1-8, das eine Sammelstruktur (99) zum Sammeln von Wasser umfasst, das in der Atmosphäre vorhanden ist, wobei die Sammelstruktur (99) mit einer Wasserrückgewinnungsoberfläche (24) versehen ist, die während der Verwendung wenigstens teilweise einen Winkel hinsichtlich der Ausrichtung der Schwerkraft bildet, **dadurch gekennzeichnet, dass** das Verfahren die folgenden Schritte beinhaltet:
- Auswählen einer jungen Pflanze,
- Abrufen von Informationen aus einer Bodenstruktur, in die die junge Pflanze gepflanzt werden soll,
- Bereitstellen eines Pflanzenbewässerungssystems (1) zum Erleichtern eines Wachstums einer jungen Pflanze, wobei das System ausstreubare Additive beinhaltet, die für die junge Pflanze und/oder die Bodenstruktur zweckgebunden sind, in die die junge Pflanze gepflanzt werden soll.

10. Verfahren nach Anspruch 9, wobei eine mehrfache Anzahl von ausstreubaren Additivarten in dem Basismaterial des Pflanzenbewässerungssystems (1) beinhaltet ist.

11. Verfahren nach einem der vorhergehenden Ansprüche 9 oder 10, wobei Additive Bodenmerkmale, wie etwa den Säuregrad, einen Salzgrad und/oder einen Kalkgrad, modifizieren.

12. Verfahren nach einem der vorherigen Ansprüche 9-11, wobei die ausstreubaren Additive eine aromatische Substanz, einen Geschmacksstoff, wie etwa Kampfer, Chili, Pfeffer und/oder Knoblauch, ein Düngemittel, Mykorrhizen, pilztötendes Material, ein Insektizid, Pilze, Tierurin oder -kot, wie etwa Elefantenkot, Köder, wie etwa Zucker, Honig und/oder Sirup und/oder getrocknete Pflanzenteile, wie etwa getrocknete Melaleuca-Arten, getrocknete Taxodidium-Arten und/oder getrocknete Samen von Juniperus-Arten, symbiotische Bakterien, Eier, Nährstoffe und/oder Sporen und/oder ein schädliches tierschädigendes Material, wie etwa Glasschleifabrieb, Sandschleifabrieb, Metallschleifabrieb, Zement, Kalk, Silizium und/oder Kautschuk umfassen.

13. Verfahren nach einem der vorhergehenden Ansprüche 9-12, das den Schritt eines Beschichtens des Pflanzenbewässerungssystems (1) mit einer Beschichtungsschicht umfasst, die Additive beinhaltet, die für die junge Pflanze und/oder die Bodenstruktur zweckgebunden sind, in die die junge Pflanze gepflanzt werden soll.

14. Verfahren nach einem der vorhergehenden Ansprüche 9-13, das den Schritt des Versehens des Pflanzenbewässerungssystems (1) mit einer Farbe umfasst, wobei ein erstes Pflanzenbewässerungssystem (1), das mit einer ersten Additivzusammensetzung versehen ist, eine erste Farbe aufweist und wobei ein zweites Pflanzenbewässerungssystem (1), das mit einer zweiten Additivzusammensetzung versehen ist, die sich von der ersten Additivzusammensetzung unterscheidet, eine zweite Farbe aufweist, die sich von der ersten Farbe unterscheidet.

15. Verwendung des Bewässerungssystems nach einem der Ansprüche 1-8 in dem Verfahren nach einem der Ansprüche 9-14.

## Revendications

1. Système d'irrigation de plantes (1) comprenant un réservoir (98) pour stocker de l'eau, le réservoir (98) comprenant une paroi extérieure (12a), un tube s'étendant vers le haut (2) formant une paroi intérieure (12b) du réservoir (98) d'eau pour entourer au moins partiellement latéralement une jeune plante et un côté inférieur (11) et le réservoir (98) étant pourvu de moyens d'irrigation (19, 21) pour acheminer l'eau présente dans le réservoir (98) vers un sous-sol situé en dessous et
comprenant en outre une structure de collecte (99) pour collecter l'eau présente dans l'atmosphère, **caractérisé en ce que** le système d'irrigation de plantes est fabriqué à partir d'un matériau de pâte à papier, le matériau de pâte à papier formant la structure de collecte et le réservoir comportant un matériau imperméable à l'eau et/ou étant pourvu d'un revêtement biodégradable imperméable aux liquides sur le côté intérieur et/ou extérieur.

2. Système d'irrigation de plantes (1) selon la revendication 1, comportant des additifs pouvant être disséminés dédiés à la jeune plante et/ou à la structure du sol où la jeune plante doit être plantée, les additifs pouvant être disséminés étant intégrés dans le matériau de pâte à papier de la structure de collecte (99) et/ou du réservoir (98) ou dans la couche de revêtement.

3. Système d'irrigation de plantes (1) selon la revendication 2, dans lequel les additifs pouvant être disséminés modifient les caractéristiques du sol, telles que le degré d'acide, un degré de sel et/ou un degré de chaux ou dans lequel les additifs pouvant être disséminés comprennent une substance aromatique, un arôme tel que le camphre, le piment, le poivre et/ou l'ail, un engrais, des mycorhizes, une matière antifongique, un insecticide, des champignons, de l'urine ou des excréments d'animaux tels que des excréments d'éléphants, des appâts tels que le sucre, le miel et/ou le sirop, et/ou des parties de plantes séchées, telles que les graines d'espèces séchées de Melaleuca, d'espèces séchées de Taxodidium et/ou d'espèces séchées de Juniperus, les bactéries symbiotiques, les œufs, les nutriments et/ou des spores et/ou un matériau nocif pour les animaux, tel que des broyages de verre, des broyages au sable, des broyages métalliques, du ciment, de la chaux, du silicium et/ou du caoutchouc.

4. Système d'irrigation de plantes (1) selon les revendications 1 à 3, dans lequel la structure de collecte (99) est pourvue d'une surface de récupération d'eau (24) qui pendant l'utilisation fait au moins partiellement un angle par rapport à l'orientation de la gravité, la surface de récupération d'eau (24) comprenant une surface de réception qui pendant l'utilisation fait un premier angle par rapport à l'orientation de la gravité, et une surface de collecte délimitant un bord inférieur de la surface de réception, laquelle surface de collecte pendant l'utilisation faisant un second angle par rapport à l'orientation de la gravité, le premier angle étant plus petit que le second angle.

5. Système d'irrigation de plantes (1) selon la revendication 4, dans lequel la surface de collecte forme un canal entourant le tube (2) et dans lequel le canal est situé sur une position radiale principalement à mi-chemin entre le tube (2) et une paroi extérieure du réservoir (98) ou sur une position radiale à proximité d'une paroi extérieure du réservoir (98).

6. Système d'irrigation de plantes (1) selon l'une quelconque des revendications 4 ou 5 précédentes, dans lequel la structure de collecte (99) comporte un système de valve passive fournissant une ouverture pour permettre à l'eau de s'écouler du canal dans le réservoir (98) lorsque le canal est humide et fermant sensiblement l'ouverture lorsque le canal est sec.

7. Système d'irrigation de plantes (1) selon l'une quelconque des revendications 4 à 6 précédentes, dans lequel la structure de collecte (99) s'étend à travers la paroi extérieure du réservoir (98) et est reliée à celle-ci à l'aide d'un raccord à encliquetage.

8. Système d'irrigation de plantes (1) selon l'une quelconque des revendications 1 à 7 précédentes, comprenant en outre une partie en surplomb s'étendant à l'écart du tube (2), au-delà d'une paroi latérale extérieure du réservoir (98), la partie en surplomb faisant éventuellement partie de la structure de collecte (99) et la surface de récupération d'eau (24) comportant une section de surface supérieure de la partie en surplomb.

9. Procédé de fabrication d'un système d'irrigation de plantes (1), selon l'une quelconque des revendications 1 à 8 précédentes, comprenant une structure de collecte (99) pour collecter l'eau présente dans l'atmosphère, la structure de collecte (99) étant pourvue d'une surface de récupération d'eau (24) qui pendant l'utilisation fait au moins partiellement un angle par rapport à l'orientation de la gravité, **caractérisé en ce que** le procédé comporte les étapes consistant à :
- sélectionner une jeune plante,
- récupérer des informations à partir d'une structure de sol dans laquelle la jeune plante doit être plantée,
- fournir un système d'irrigation de plantes (1) pour faciliter la croissance d'une jeune plante, le système comportant des additifs pouvant être disséminés dédiés à la jeune plante et/ou à la structure du sol où la jeune plante doit être plantée.

10. Procédé selon la revendication 9, dans lequel un nombre multiple d'espèces additives pouvant être disséminées sont inclues dans le matériau de base du système d'irrigation de plantes (1).

11. Procédé selon l'une quelconque des revendications 9 ou 10 précédentes, dans lequel des additifs modifient les caractéristiques du sol, telles que le degré d'acide, un degré de sel et/ou un degré de chaux.

12. Procédé selon l'une quelconque des revendications 9 à 11 précédentes, dans lequel les additifs pouvant être disséminés comprennent une substance aromatique, un arôme tel que le camphre, le piment, le poivre et/ou l'ail, un engrais, des mycorhizes, une matière antifongique, un insecticide, des champignons, de l'urine ou des excréments d'animaux tels que les excréments d'éléphants, les appâts tels que le sucre, le miel et/ou le sirop et/ou les parties de plantes séchées, telles que les graines d'espèces séchées de Melaleuca, d'espèces séchées de Taxodidium et/ou d'espèces séchées de Juniperus, les bactéries symbiotiques, les œufs, les nutriments et/ou des spores et/ou un matériau nocif pour les animaux, tel que des broyages de verre, des broyages au sable, des broyages métalliques, du ciment, de la chaux, du silicium et/ou du caoutchouc.

13. Procédé selon l'une quelconque des revendications 9 à 12 précédentes, comprenant l'étape de revêtement du système d'irrigation des plantes (1) avec une couche de revêtement comportant des additifs dédiés à la jeune plante et/ou à la structure du sol où la jeune plante doit être plantée.

14. Procédé selon l'une quelconque des revendications 9 à 13 précédentes, comprenant l'étape consistant à doter le système d'irrigation de plantes (1) d'une couleur, dans lequel un premier système d'irrigation de plantes (1) pourvu d'une première composition additive a une première couleur et dans lequel un second système d'irrigation de plantes (1) pourvu d'une seconde composition additive, différente de la première composition additive, a une seconde couleur, différente de la première couleur.

15. Utilisation du système d'irrigation selon l'une quelconque des revendications 1 à 8 dans le procédé selon l'une quelconque des revendications 9 à 14.
